# EUROPEAN PATENT SPECIFICATION

(11) **EP 3 173 925 B1**
(45) Date of publication and mention of the grant of the patent: **17.06.2020**
(21) Application number: 16188351.7
(22) Date of filing: 12.09.2016
(51) Int. Cl.: G06F 9/451, H04M 1/725, H04L 29/08

(54) **INTERFACE DISPLAY METHOD AND APPARATUS, COMPUTER PROGRAM AND RECORDING MEDIUM**
SCHNITTSTELLENANZEIGEVERFAHREN UND -VORRICHTUNG, COMPUTERPROGRAMM UND AUFZEICHNUNGSMEDIUM
PROCÉDÉ ET APPAREIL D'AFFICHAGE D'INTERFACE, PROGRAMME INFORMATIQUE ET SUPPORT D'ENREGISTREMENT

(30) Priority: 27.11.2015 CN 201510848015
(43) Date of publication of application: 31.05.2017
(73) Proprietor: Xiaomi Inc., Beijing 100085 (CN)
(72) Inventor: SHI, Dalong, BEIJING, 100085 (CN); QIAO, Liang, BEIJING, 100085 (CN); HAN, Shangyou, BEIJING, 100085 (CN)
(74) Representative: Cabinet Beau de Loménie

(56) References cited:
- EP-A2- 2 120 142
- US-A1- 2010 036 912
- US-A1- 2014 215 330

## Description

### TECHNICAL FIELD

The present application is related to the field of information display, and more particularly, to an interface display method and apparatus, a computer program and a recording medium.

### BACKGROUND

Applications are an important integral part of a terminal. In the related arts, when a terminal runs an application, user interfaces presented by the terminal to different users are the same. For instance, for each operation item in an application, the terminal always presents a default operation item.

D1 (US 2010/036912) discloses signing up users to social networks based on location. D1 describes identifying a default language based on a current user location and presenting user-interface components in the default language when necessary.

D2 (US 2014/215330) discloses a map interface having a language control that a user can manipulate to switch between a default language and a local language determined based on the current location of the mobile device.

D3 (EP 2 120 142) discloses configuring a user interface of a device based on location of the device, movement of the device, and/or current data/time.

### SUMMARY

Accordingly, embodiments of the present invention provide an interface display method and apparatus, a computer program and a recording medium to solve the problems of the related arts as set out in claims 1-9.

According to a first aspect of embodiments of the present invention, there is provided an interface display method intended to be performed by a terminal and comprising: transmitting location information to a server; receiving a dialect that the server returns, wherein the dialect corresponds to the location information that the server acquires; and displaying a user interface including a dialect operation item according to the dialect, wherein the dialect operation item is an operation item expressed using an expression in the dialect.

As it is known from the person skilled in the art, a dialect is a "regional" form of a language as spoken or used in a region of a country.

Optionally, displaying the user interface including the dialect operation item according to the dialect comprises: acquiring a dialect file corresponding to the dialect; for a default operation item in the user interface, finding an expression in the dialect file which corresponds to the default operation item; and displaying the user interface including the default operation item expressed using the expression.

Optionally, there are at least two dialects. Acquiring the dialect file corresponding to the dialect comprises: detecting whether a historically used dialect is included in the at least two dialects; and if a historically used dialect is included in the at least two dialects, acquiring a dialect file corresponding to the historically used dialect.

Optionally, transmitting the location information to the server comprises: transmitting to the server at least one of a mobile phone number of the terminal and geographical location information obtained by positioning, wherein the mobile phone number is used by the server to determine an area to which the terminal belongs according to home location information of the mobile phone number and return a dialect corresponding to the area, and the geographical location information is used by the server to determine an area to which the terminal belongs according to the geographical location information and return a dialect corresponding to the area.

Optionally, transmitting location information to the server comprises: transmitting an Internet Protocol (IP) address of the terminal to the server, wherein the IP address is used by the server to determine the area to which the terminal belongs according to the IP addresses and acquire and return the dialect corresponding to the area.

According to a second aspect of the embodiments of the present invention, there is provided an interface display method intended to be performed by a server and comprising: receiving location information of a terminal that the terminal transmits; acquiring a dialect corresponding to the location information; and returning the dialect to the terminal, wherein the dialect is used by the terminal to display a user interface including a dialect operation item according to the dialect, and the dialect operation item is an operation item expressed using an expression in the dialect.

According to a third aspect of the embodiments of the present invention, there is provided an interface display apparatus embedded in a terminal and comprising: a transmitting module configured to transmit location information to a server; a receiving module configured to receive a dialect that the server returns, wherein the dialect corresponds to the location information that the server acquires; and a displaying module configured to display a user interface including a dialect operation item according to the dialect, wherein the dialect operation item is an operation item expressed using an expression in the dialect.

Optionally, the displaying module comprises: an acquisition sub-module configured to acquire a dialect file corresponding to the dialect; a finding sub-module configured to, for a default operation item in the user interface, find an expression in the dialect file which corresponds to the default operation item; and a display sub-module configured to display the user interface including the default operation item expressed using the expression.

Optionally, there are at least two dialects. The acquisition sub-module is further configured to: detect whether a historically used dialect is included in the at least two dialects; and if the historically used dialect is included in the at least two dialects, acquire a dialect file corresponding to the historically used dialect.

Optionally, the transmitting module is configured to transmit to the server at least one of a mobile phone number of the terminal and geographical location information obtained by positioning. The mobile phone number is used by the server to determine an area to which the terminal belongs according to home location information of the mobile phone number and return a dialect corresponding to the area, and the geographical location information is used by the server to determine an area to which the terminal belongs according to the geographical location information and return a dialect corresponding to the area.

Optionally, the transmitting module is configured to transmit an IP address of the terminal to the server. The IP address is used by the server to determine the area to which a terminal belongs according to the IP address and acquire and return the dialect corresponding to the area.

According to a fourth aspect of the embodiments of the present invention, there is provided an interface display apparatus embedded in a server and comprising: a receiving module configured to receive location information of a terminal that the terminal transmits; an acquiring module configured to acquire a dialect corresponding to the location information; and a returning module configured to return the dialect to the terminal, wherein the dialect is used by the terminal to display a user interface including a dialect operation item according to the dialect, and the dialect operation item is an operation item expressed using an expression in the dialect.

According to a fifth aspect of the embodiments of the present invention, there is provided an interface display apparatus, comprising: a processor; and a memory for storing instructions executable by the processor. The processor is configured to: transmit location information to a server; receive a dialect that the server returns, wherein the dialect corresponds to the location information that the server acquires; and display a user interface including a dialect operation item according to the dialect, wherein the dialect operation item is an operation item expressed using an expression in the dialect.

According to a sixth aspect of the embodiments of the present invention, there is provided an interface display apparatus, comprising: a processor; and a memory for storing instructions executable by the processor. The processor is configured to: receive location information of a terminal that the terminal transmits; acquire a dialect corresponding to the location information; and return the dialect to the terminal, wherein the dialect is used by the terminal to display a user interface including a dialect operation item according to the dialect, and the dialect operation item is an operation item expressed using an expression in the dialect.

In one particular embodiment, the steps of the interface display method are determined by computer program instructions.

Consequently, according to a seventh aspect, the invention is also directed to a computer program for executing the steps of an interface display method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions of the embodiments of this invention may have the following advantageous effects.

With location information transmitted to a server, the server can acquire and return a dialect corresponding to the location information, and a terminal can display a user interface including a dialect operation item according to the received dialect, wherein the dialect operation item is an operation item expressed using an expression in the dialect. This solves the problems in the related arts that a default operation item presented by a terminal may not conform to reading habits of a user and the interface display is not user friendly, and achieves the effects that an operation item can be expressed using an expression in a dialect and hence a user interface including a dialect operation item is displayed such that the interface display is more user friendly.

It should be understood that both the foregoing general description and the following detailed description are exemplary only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing an interface display method according to an exemplary embodiment;
Fig. 2A is a flow chart showing another interface display method according to an exemplary embodiment;
Fig. 2B is a schematic drawing showing an interface according to an exemplary embodiment;
Fig. 2C is a schematic drawing showing another interface according to an exemplary embodiment;
Fig. 2D is a schematic drawing showing a further interface according to an exemplary embodiment;
Fig. 3 is a flow chart showing another interface display method according to an exemplary embodiment;
Fig. 4 is a block diagram showing an interface display apparatus according to an exemplary embodiment;
Fig. 5 is a block diagram showing an interface display apparatus according to another exemplary embodiment;
Fig. 6 is a block diagram showing an interface display apparatus according to yet another exemplary embodiment;
Fig. 7 is a block diagram showing an interface display apparatus according to a further exemplary embodiment; and
Fig. 8 is a block diagram showing an interface display apparatus according to yet a further exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise presented. The embodiments set forth in the following description of exemplary embodiments do not represent all embodiments consistent with the invention. Instead, they are merely examples of apparatuses and methods consistent with aspects related to the invention as recited in the appended claims.

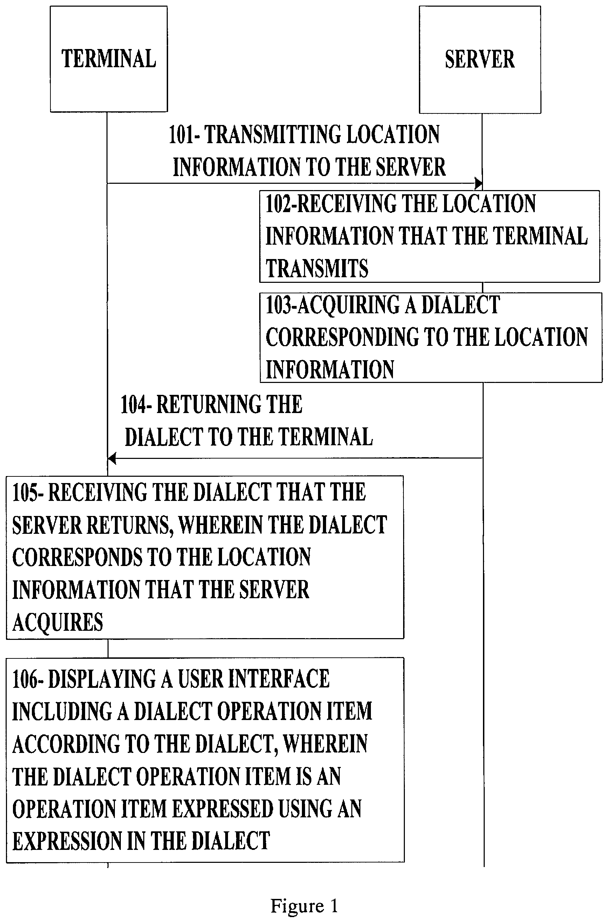

Fig. 1 is a flow chart showing an interface display method according to an exemplary embodiment and as performed by a terminal and a server. The method may comprise the following steps.

At step 101, the terminal transmits location information to the server.

When the terminal is a mobile phone, the location information may include at least one of a mobile phone number of the terminal and geographical location information obtained by positioning. The mobile phone number is used by the server to determine an area to which the terminal belongs according to home location information of the mobile phone number and return a dialect corresponding to the area. The geographical location information is used by the server to determine an area to which the terminal belongs according to the geographical location information and return a dialect corresponding to the area.

When the terminal is not a mobile phone but has a positioning function, such as an IPad and the like, the location information may include a geographical location information obtained by positioning.

When the terminal is one that has no positioning function but a networking function, such as a desktop computer and the like, the location information may include an IP (Internet Protocol) address used by the terminal for networking. The IP address is used by the server to determine an area to which the terminal belongs according to the IP address and acquire and return a dialect corresponding to the area.

At step 102, the server receives the location information of the terminal that the terminal transmits.

At step 103, the server acquires a dialect corresponding to the location information. As it is known from the person skilled in the art, a dialect is a "regional" form of a language as spoken or used in a region of a country.

At step 104, the server returns the dialect to the terminal.

The dialect is used by the terminal to display a user interface including a dialect operation item according to the dialect, and the dialect operation item is an operation item expressed using an expression in the dialect.

At step 105, the terminal receives a dialect that the server returns, where the dialect corresponds to the location information that the server acquires.

At step 106, the terminal displays a user interface including a dialect operation item according to the dialect, and the dialect operation item is an operation item expressed using an expression in the dialect.

To sum up, with the methods provided by this embodiment, location information is transmitted to a server, the server acquires and returns a dialect corresponding to the location information, and a terminal displays a user interface including a dialect operation item according to the received dialect, wherein the dialect operation item is an operation item expressed using an expression in the dialect. This solves the problems in the related arts that a default operation item presented by a terminal may not conform to reading habits of a user and the interface display is not user friendly, and achieves the effects that an operation item is expressed using an expression in a dialect and hence a user interface including a dialect operation item is displayed such that the interface display is more user friendly.

In a practical implementation, the step 101 may be implemented according to any of the two following possible manners.

In the first manner, at least one of a mobile phone number of the terminal and geographical location information obtained by positioning is transmitted to the server. The mobile phone number is used by the server to determine an area to which the terminal belongs according to home location information of the mobile phone number and to return a dialect corresponding to the area. The geographical location information is used by the server to determine an area to which the terminal belongs according to the geographical location information and to return a dialect corresponding to the area.

In the second manner, an IP address of the terminal is transmitted to the server. The IP address is used by the server to determine an area to which the terminal belongs according to the IP address and acquire and return a dialect corresponding to the area.

Accordingly, the above two manners will be described in detail in two different embodiments below.

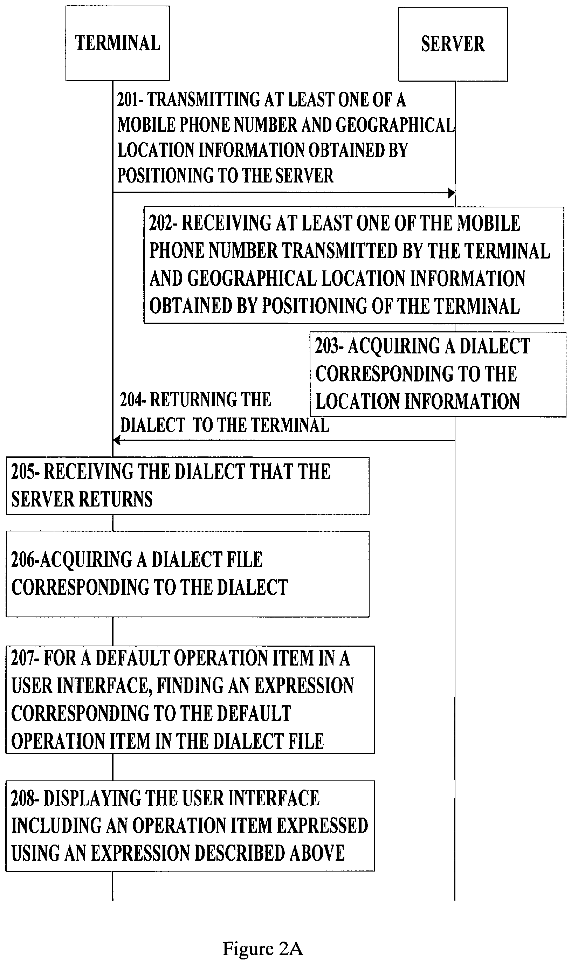

Fig. 2A is a flow chart showing another interface display method according to an exemplary embodiment. This embodiment is illustrated by way of example in a context where the terminal transmits location information to the server in the first manner described above. As shown in Fig. 2A, the method may comprise the following steps.

At step 201, the terminal transmits to the server at least one of a mobile phone number and geographical location information obtained by positioning.

When the terminal is a mobile phone, the mobile phone may transmit to the server at least one of the mobile phone number and geographical location information obtained by positioning. The mobile phone number is used by the server to determine an area to which the mobile phone belongs according to home location information of the mobile phone number and to return a dialect corresponding to the area. The geographical location information is used by the server to determine an area to which the terminal belongs according to the geographical location information and return a dialect corresponding to the area.

A mobile phone number has a uniform coding format, where digits 4 through 7 of the mobile phone number represent an area code that is used to indicate a home location of the mobile phone number. Accordingly, the mobile phone can transmit the mobile phone number to the server. In a practical implementation, in order to reduce network resources that need to be occupied when the mobile phone transmits the location information, the mobile phone can transmit the first 7 digits of the mobile phone number to the server, but the embodiment is not limiting in this regard.

In addition, the mobile phone can obtain its own geographical location information (generally represented by latitude and longitude information) by GPS (Global Positioning System) positioning, and therefore the mobile phone can also transmit the geographical location information obtained by positioning to the server.

When the terminal is not a mobile phone but has a positioning function, such as an IPad and the like, the terminal may transmit the geographical location information obtained by positioning to the server.

At step 202, the server receives at least one of the mobile phone number transmitted by the terminal and geographical location information obtained by positioning of the terminal.

At step 203, the server acquires a dialect corresponding to the location information.

Optionally, this step may comprise the following operations.

First, the server determines an area to which the terminal belongs according to the location information.

When the location information received by the server contains a mobile phone number, the server can determine a home location of the mobile phone number according to the digits 4 through 7 of the mobile phone number. For example, when the mobile phone number received by the server is "1572282****", the server determines that the home location of the mobile phone number is "Taizhou" according to "2282" of the mobile phone number, that is, the server determines that the area to which the terminal using this mobile phone number belongs is "Taizhou".

When the location information received by the server contains geographical location information obtained by positioning of the terminal, the server determines an area to which the terminal belongs according to the geographical location information. For example, if the geographical location information received by the server is "longitude 120.29°, latitude 31.59°", then the server can determine that the area to which the terminal belongs is "Wuxi" according to the latitude and longitude information.

Second, the server finds a dialect corresponding to the area to which the terminal belongs according to a correspondence between the area and the dialect.

The server can pre-store the correspondence between the area and the dialect, Thus, after determining the area to which the terminal belongs, the server can read the pre-stored correspondence, and determine the dialect corresponding to the area according to the correspondence.

There may be at least two dialects in the same area. For example, dialects in "Taizhou" area may include "Taixing dialect", "Jiangyan dialect", "Jingjiang dialect" and the like. Accordingly, there may be at least two dialects determined by the server for the area to which the terminal belongs.

In addition, when the terminal is a mobile phone and the mobile phone transmits to the server both a mobile phone number and geographical location information obtained by positioning, the dialect determined by the server according to the mobile phone number may or may not be the same as that determined according to the geographical location information. For instance, the area to which the terminal belongs determined by the server according to a mobile phone number "1572282****" is "Taizhou", while the area to which the terminal belongs determined according to the geographical location information "longitude 120.29°, latitude 31.59°" is "Wuxi". In this case, the server may determine both the "Taizhou dialect" and "Wuxi dialect". Therefore, there may also be at least two dialects determined by the server as corresponding to the area to which the terminal belongs.

At step 204, the server returns the dialect to the terminal.

At step 205, the terminal receives the dialect that the server returns.

At step 206, the terminal acquires a dialect file corresponding to the dialect.

If there is one dialect, the terminal acquires a dialect file corresponding to the dialect.

If there are at least two dialects, this step may comprise the following operations.

First, it is detected whether a historically used dialect is included in the at least two dialects.

Second, if the historically used dialect is included in the at least two dialects, a dialect file corresponding to the historically used dialect is acquired.

If the detection result of the terminal is that the historically used dialect is included in the at least two dialects, it means that the historically used dialect may be a dialect that conforms to user's usage habits. Accordingly, the terminal can then acquire the dialect file corresponding to the historically used dialect.

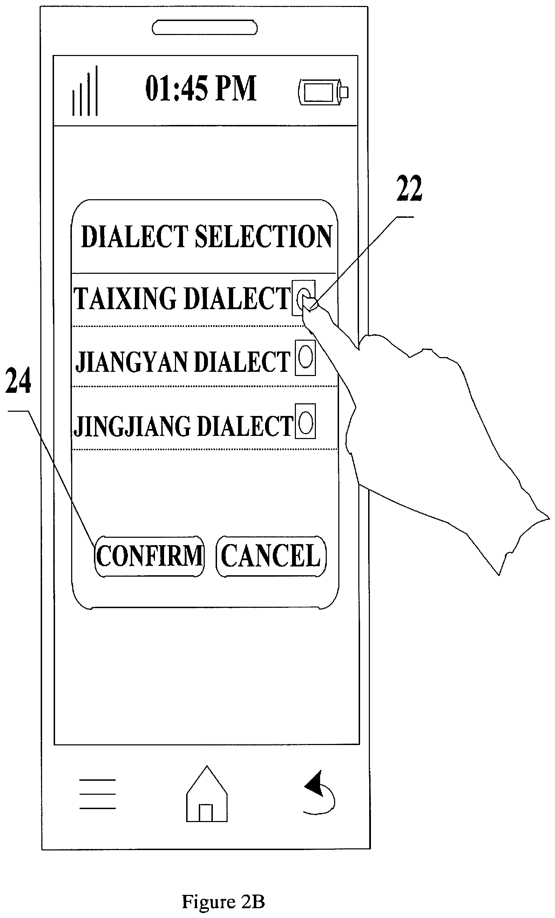

It should be noted that this embodiment is only illustrated by way of example where a terminal acquires a dialect file corresponding to the dialect in the manner described above when there are at least two dialects. Optionally, the terminal can also acquire the dialect file corresponding to the dialect in other manners. For instance, the terminal presents the at least two received dialects, receives a selection signal that selects one from the at least two dialects, and acquires the dialect file corresponding to the dialect that the selection signal selects. Taking an example where three dialects of "Taixing dialect", "Jiangyan dialect" and "Jingjiang dialect" are received by the terminal, the terminal can present the interface as shown in Fig. 2B. When clicking a selection control 22 and clicking a determination control 24, a user acquires a dialect file corresponding to the "Taixing dialect" that corresponds to the selection control 22.

Optionally, the step in which the terminal acquires a dialect file corresponding to some dialect may comprise: detecting whether a dialect file corresponding to the dialect is included in the terminal; and if not, acquiring the dialect file corresponding to the dialect from the server. Optionally, the terminal can also directly acquire the dialect file corresponding to the dialect from the server, and the embodiment is not limiting in this regard.

At step 207, for a default operation item in the user interface, the terminal finds an expression in the dialect file which corresponds to the default operation item.

There may be one or at least two default operation items in the user interface, and the embodiment is not limiting in this regard. When there are at least two default operation items, the terminal finds an expression in the dialect file which corresponds to each default operation item.

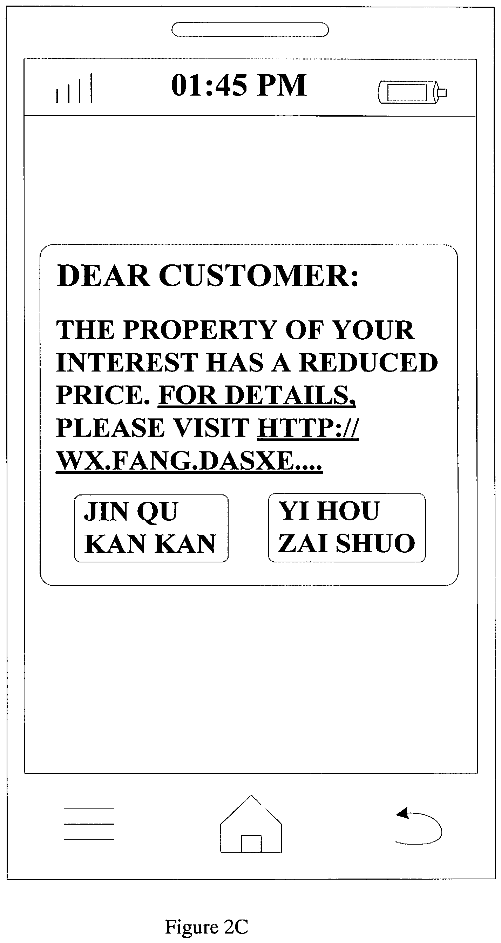

For instance, referring to Fig. 2C, the user interface includes two default operation items "jin qu kan kan ("go in and have a look" in English)" and "yi hou zai shuo ("discuss it later" in English)", then the expression corresponding to the "jin qu kan kan" found by the terminal in the dialect file is "jin qu chǒu chǒu", and the expression in the dialect file which corresponds to the "yi hou zai shuo" is "hui tou zai shuo".

At step 208, the terminal displays the user interface including the operation item expressed using an expression described above.

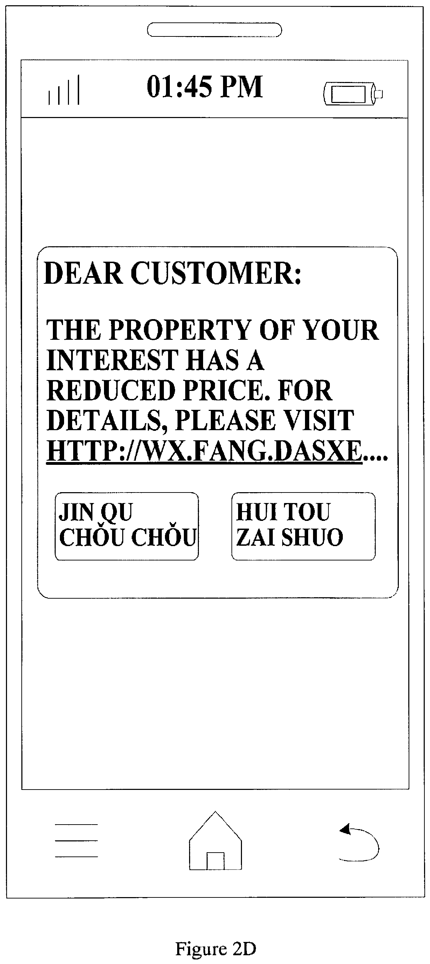

For instance, for the user interface as shown in Fig. 2C, after finding the expression of the default operation item in the dialect file, the terminal can present the interface as shown in Fig. 2D.

An area to which a terminal belongs will typically not change for a short period of time, i.e., the dialect corresponding to the area will not change for a short period of time, while the number of times that the terminal logs in applications in a day is relatively large. Therefore, in order to avoid the problem that a server needs to frequently determine a dialect corresponding to location information and would thus consume a significant amount of resources caused by transmitting location information to the server whenever the terminal logs into the applications, the terminal can transmit location information to the server at a predetermined time interval in specific implementations. Alternatively, when determining that an area to which a terminal belongs, e.g., the city where the terminal is located, has changed, the positioning system in the terminal transmits the changed location information to the server. Optionally, if an application in a terminal uses a mobile phone number as a login identification, the application may also transmit the mobile phone number to the server whenever the application is logged in.

To sum up, with the method provided by this embodiment, location information is transmitted to a server, the server acquires and returns a dialect corresponding to the location information, and a terminal displays a user interface including a dialect operation item according to the received dialect, wherein the dialect operation item is an operation item expressed using an expression in the dialect. This solves the problems in the related arts that a default operation item presented by a terminal may not conform to reading habits of a user and the interface display is not user friendly, and achieves the effects that an operation item is expressed using an expression in a dialect and hence a user interface including a dialect operation item is displayed such that the interface display is more user friendly.

In the method provided by this embodiment, it is detected whether dialects that a server returns include a historically used dialect, and if so a dialect file of the historically used dialect is directly acquired. This saves the user from repeatedly selecting the same dialect, and achieves the effects of reducing user operations and accelerating the display of such an interface.

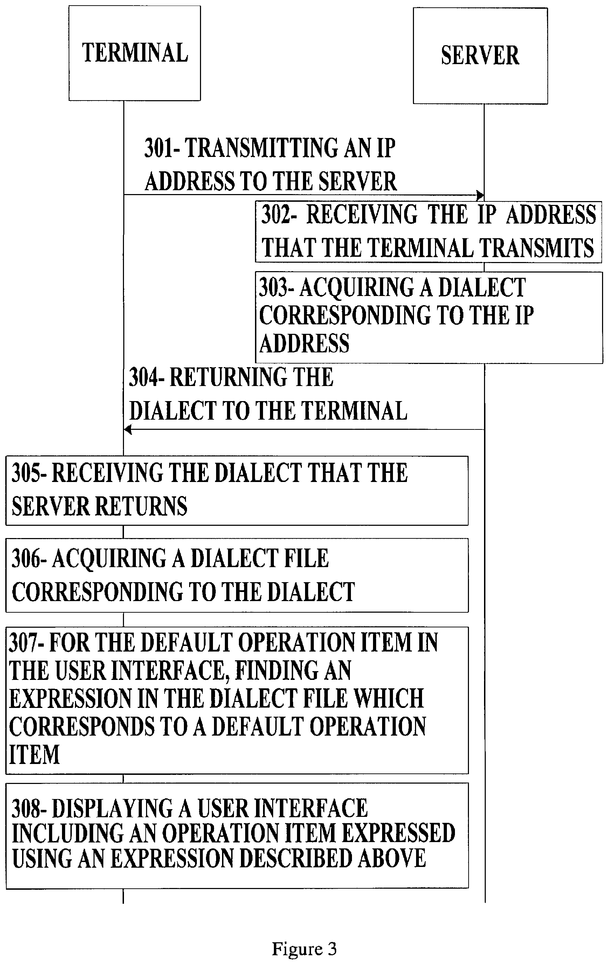

Fig. 3 is a flow chart showing yet another interface display method according to an exemplary embodiment. This embodiment is illustrated by way of example where a terminal transmits location information to a server in the second manner described above. As shown in Fig. 3, the method may comprise the following steps.

At step 301, the terminal transmits an IP address to the server.

The IP address is used by the server to determine an area to which the terminal belongs according to the IP address and acquire and return a dialect corresponding to the area.

When connected to a network, the terminal can acquire its own IP address, and transmit the IP address to the server.

At step 302, the server receives the IP address transmitted by the terminal.

At step 303, the server acquires a dialect corresponding to the IP address.

Optionally, the step may comprise the following operations.

First, the server determines the area to which the terminal belongs according to the IP address.

For instance, if the IP address transmitted by the terminal and received by the server is 221.227.72.130, the area to which the terminal belongs can be determined as "Wuxi" according to this IP address.

Second, the server finds a dialect corresponding to the area to which the terminal belongs according to a correspondence between the area and the dialect.

The server can pre-store the correspondence between the area and the dialect. Thus, after determining the area to which the terminal belongs, the server can read the pre-stored correspondence, and determine the dialect corresponding to the area according to the correspondence.

At step 304, the server returns the dialect to the terminal.

At step 305, the terminal receives the dialect that the server returns.

At step 306, the terminal acquires a dialect file corresponding to the dialect.

If there is one dialect, the terminal acquires a dialect file corresponding to the dialect.

If there are at least two dialects, this step may comprise the following operations.

First, it is detected whether a historically used dialect is included in the at least two dialects.

Second, if the historically used dialect is included the at least two dialects, a dialect file corresponding to the historically used dialect is acquired.

If the detection result of the terminal is that the historically used dialect is included in the at least two dialects, it means that the historically used dialect may be a dialect that conforms to user's usage habits. Accordingly, the terminal can then acquire the dialect file corresponding to the historically used dialect.

At step 307, for a default operation item in the user interface, the terminal finds an expression in the dialect file which corresponds to the default operation item.

At step 308, the terminal displays the user interface including the operation item expressed using the expression described above.

It should be noted that, the steps 304 to 308 in this embodiment are implemented in a similar manner to the steps 204 to 208 in the above embodiment, and will not be elaborated herein.

To sum up, with the method provided by this embodiment, location information is transmitted to a server, the server acquires and returns a dialect corresponding to the location information, a terminal displays a user interface including a dialect operation item according to the received dialect, wherein the dialect operation item is an operation item expressed using an expression in the dialect. This solves the problems in the related arts that a default operation item presented by a terminal may not conform to reading habits of a user and the interface display is not user friendly, and achieves the effects that an operation item is expressed using an expression in a dialect and hence a user interface including a dialect operation item is displayed such that the interface display is more user friendly.

In the method provided by this embodiment, it is detected whether the dialect that the server returns includes a historically used dialect, and if so a dialect file of the historically used dialect is directly acquired. This saves a user from repeatedly selecting the same dialect, and achieves the effects of reducing user operations and accelerating the display of such an interface.

It should be noted additionally that the above embodiment is only illustrated by way of example in a context where a terminal transmits at least one of a mobile phone number and geographical location information obtained by positioning to a server or transmits an IP address to the server. Optionally, the terminal can also transmit an IP address and at least one of a mobile phone number and geographical location information obtained by positioning to the server, and the embodiment is not limiting in this regard.

It should also be noted that, in the above embodiment, the steps related to the terminal side can be implemented as a whole as an interface display method at the terminal side, and the steps related to the server side can be implemented as a whole as an interface display method at the server side.

The following relates to apparatus embodiments of this invention, and can be used for implementing method embodiments of this invention. Reference can be made to the method embodiments of this invention for the details not disclosed in the apparatus embodiments of this invention.

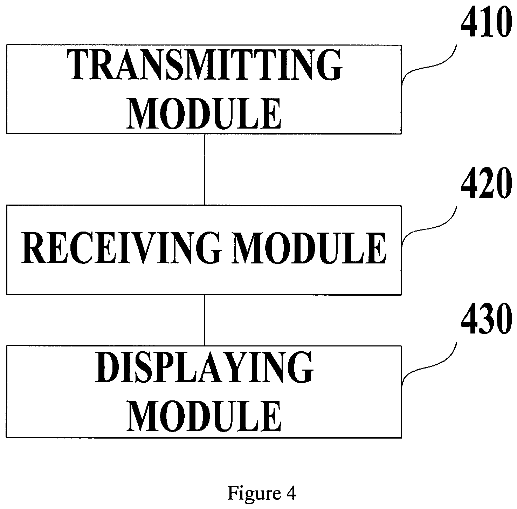

Fig. 4 is a block diagram showing an interface display apparatus according to an exemplary embodiment. The apparatus can be implemented as a terminal (such as a mobile phone, an IPad, a laptop computer, a desktop computer and the like) or a part of it by means of hardware, software, or a combination thereof. The apparatus can comprise: a transmitting module 410, a receiving module 420 and a displaying module 430.

The transmitting module 410 is configured to transmit location information to a server.

When the terminal is a mobile phone, the location information may include at least one of a mobile phone number of the terminal and geographical location information obtained by positioning. The mobile phone number is used by the server to determine an area to which the terminal belongs according to home location information of the mobile phone number and return a dialect corresponding to the area. The geographical location information is used by the server to determine an area to which the terminal belongs according to the geographical location information and return a dialect corresponding to the area.

When the terminal is not a mobile phone but has a positioning function, such as an IPad and the like, the location information may include geographical location information obtained by positioning.

When the terminal is one that has no positioning function but a networking function, such as a desktop computer and the like, the location information may include an IP (Internet Protocol) address used by the terminal for networking. The IP addresses is used by the server to determine an area to which the terminal belongs according to the IP addresses and acquire and return a dialect corresponding to the area.

The receiving module 420 is configured to receive a dialect that the server returns, wherein the dialect corresponds to the location information acquired by the server and transmitted by the transmitting module 410.

The dialect is used by the terminal to display a user interface including a dialect operation item according to the dialect, and the dialect operation item is an operation item expressed using an expression in the dialect.

The displaying module 430 is configured to display a user interface including a dialect operation item according to the dialect, wherein the dialect operation item is an operation item expressed using an expression in the dialect received by the receiving module 420.

To sum up, with the apparatus provided by this embodiment, location information is transmitted to a server, the server acquires and returns a dialect corresponding to the location information, a terminal displays a user interface including a dialect operation item according to the received dialect, wherein the dialect operation item is an operation item expressed using an expression in the dialect. This solves the problems in the related arts that a default operation item presented by a terminal may not conform to reading habits of a user and the interface display is not user friendly, and achieves the effects that an operation item is expressed using an expression in a dialect and hence a user interface including a dialect operation item is displayed such that the interface display is more user friendly.

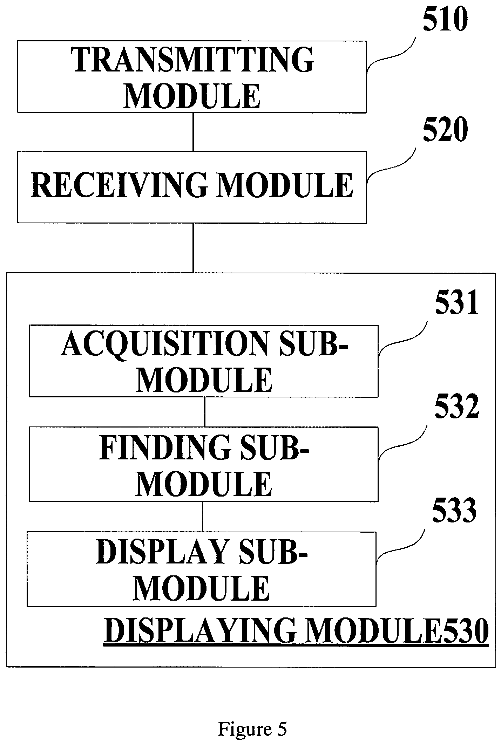

Fig. 5 is a block diagram showing an interface display apparatus according to another exemplary embodiment. The apparatus can be implemented as a terminal (such as a mobile phone, an IPad, a laptop computer, a desktop computer and the like) or a part of it by means of hardware, software, or a combination thereof. The apparatus can comprise: a transmitting module 510, a receiving module 520 and a displaying module 530.

The transmitting module 510 is configured to transmit location information to a server.

The receiving module 520 is configured to receive a dialect that the server returns, wherein the dialect corresponds to the location information acquired by the server and transmitted by the transmitting module 510.

The displaying module 530 is configured to display a user interface including a dialect operation item, wherein the dialect operation item is an operation item expressed using an expression in the dialect received by the receiving module 520.

Optionally, the displaying module 530 comprises: an acquisition sub-module 531, a finding sub-module 532 and a display sub-module 533.

The acquisition sub-module 531 is configured to acquire a dialect file corresponding to a dialect.

Optionally, the acquisition sub-module 531 may acquire the dialect file corresponding to the dialect by: detecting whether the dialect file corresponding to the dialect is included in the terminal; and if so acquiring the dialect file corresponding to the dialect from the server. Optionally, the acquisition sub-module 531 can also directly acquire the dialect file corresponding to the dialect from the server, and the embodiment is not limiting in this regard.

The finding sub-module 532 is configured to, for a default operation item in the user interface, find an expression corresponding to a default operation item in the dialect file acquired in the acquisition sub-module 531.

There may be one or at least two default operation items in the user interface, and the embodiment is not limiting in this regard. When there are at least two default operation items the finding sub-module 532 finds an expression corresponding to each default operation item in the dialect file.

The display sub-module 533 is configured to display the user interface including the operation item expressed using the expression found by the finding sub-module 532.

Optionally, there are at least two dialects. The acquisition sub-module 531 is further configured to: detect whether a historically used dialect is included in the at least two dialects; and if the historically used dialect is included at least two dialects, acquire a dialect file corresponding to the historically used dialect.

If the detection result of the acquisition sub-module 531 is that the historically used dialect is included in the at least two dialects, it means that the historically used dialect may be a dialect that conforms to user's usage habits. Accordingly, the acquisition sub-module 531 can then acquire a dialect file corresponding to the historically used dialect.

Optionally, the transmitting module 510 is configured to transmit at least one of a mobile phone number of the terminal and geographical location information obtained by positioning to a server. The mobile phone number is used by the server to determine an area to which the terminal belongs according to home location information of the mobile phone number.

When the terminal is a mobile phone, the mobile phone transmits at least one of the mobile phone number and geographical location information obtained by positioning to the server. The mobile phone number is used by the server to determine an area to which the mobile phone belongs according to home location information of the mobile phone number and return a dialect corresponding to the area. The geographical location information is used by the server to determine an area to which the terminal belongs according to the geographical location information and return a dialect corresponding to the area.

A mobile phone number has a uniform coding format, where digits 4 through 7 of the mobile phone number represent an area code that is used to indicate a home location of the mobile phone number. Accordingly, the transmitting module 510 can transmit the mobile phone number to the server. In a practical implementation, in order to reduce network resources that need to be occupied when the transmitting module 510 transmits the location information, the transmitting module 510 can transmit the first 7 digits of the mobile phone number to the server, and the embodiment is not limiting in this regard.

In addition, a mobile phone can obtain its own geographical location information (generally represented by latitude and longitude information) by GPS (Global Positioning System) positioning, and therefore the transmitting module 510 can also transmit geographical location information obtained by positioning to the server.

When the terminal is not a mobile phone but has a positioning function, such as an IPad and the like, the transmitting module 510 transmits geographical location information obtained by positioning to a server.

Optionally, the transmitting module 510 is configured to transmit an IP address of the terminal to the server, wherein the IP address is used by the server to determine the area to which the terminal belongs according to the IP address and acquire and return the dialect corresponding to the area.

When the terminal is connected to a network, the transmitting module 510 can acquire an IP address of the terminal, and transmit the IP address to the server.

To sum up, with the apparatus provided by this embodiment, location information is transmitted to a server, the server acquires and returns a dialect corresponding to the location information, and a terminal displays a user interface including a dialect operation item according to the received dialect, wherein the dialect operation item is an operation item expressed using an expression in the dialect. This solves the problems in the related arts that a default operation item presented by a terminal may not conform to reading habits of a user and the interface display is not user friendly, and achieves the effects that an operation item is expressed using an expression in a dialect and hence a user interface including a dialect operation item is displayed such that the interface display is more user friendly.

In the apparatus provided by this embodiment, it is detected whether a dialect that a server returns includes a historically used dialect, and if so a dialect file of the historically used dialect is directly acquired. This saves the user from repeatedly selecting the same dialect, and achieves the effects of reducing user operations and accelerating the display of such an interface.

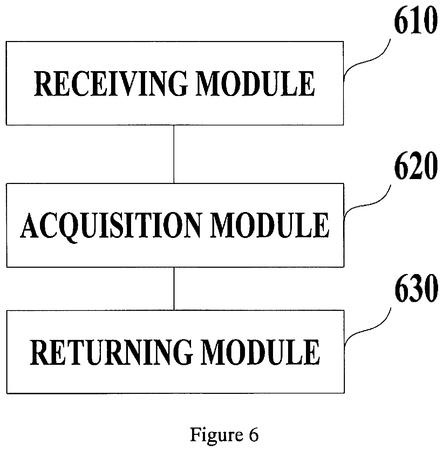

Fig. 6 is a block diagram showing an interface display apparatus according to yet another exemplary embodiment. The apparatus can be implemented as all or part of a server by means of items of hardware or software, or both. The apparatus can comprise: a receiving module 610, an acquiring module 620 and a returning module 630.

The receiving module 610 is configured to receive location information on a terminal that the terminal transmits.

When the terminal is a mobile phone, the location information includes at least one of a mobile phone number of the terminal and geographical location information obtained by positioning, wherein the mobile phone number is used to indicate that a server determines an area to which the terminal belongs according to home location information on the mobile phone number, and returns a dialect corresponding to the area, and the geographical location information is used to indicate that the server determines an area to which the terminal belongs according to the geographical location information, and returns a dialect corresponding to the area.

When the terminal is one that has a function of positioning, such as an IPad and the like, besides a mobile phone, the location information includes geographical location information obtained by positioning.

When the terminal is one that has no function of positioning but networking, such as a desktop computer and the like, the location information includes IP (Internet Protocol) addresses upon networking of the terminal. The IP addresses are used to indicate that the server determines the area to which the terminal belongs according to the IP addresses, acquires and returns the dialect corresponding to the area.

The acquiring module 620 is configured to acquire a dialect corresponding to the location information received by the receiving module 610.

The returning module 630 is configured to return the dialect that the acquiring module 620 acquires to the terminal, where the dialect is used to indicate that the terminal displays a user interface including a dialect operation item according to the dialect, and the dialect operation item is an operation item expressed using an expression in a dialect.

Accordingly, the apparatus provided by this embodiment is that, by transmitting location information to a server, acquiring and returning by the server a dialect corresponding to the location information, a terminal displays a user interface including a dialect operation item according to the received dialect, where the dialect operation item is an operation item expressed using an expression in a dialect; this solves the problems that a default operation item presented by a terminal may not tie in with reading habits of a user, and an interface display is not friendly in the related arts, and achieves the effects of expressing an operation item using an expression in a dialect, and hence displaying a user interface including a dialect operation item, such that the interface display is more friendly.

It's to be noted that the above embodiment is only exemplified by dividing each of the functional modules described above, when the apparatus provided by the above embodiment implements an interface display function, in practice, the above function assignment is completed by different functional modules according to practical requirements, that is, dividing content structure of an apparatus into different functional modules to complete all or part of functions described above.

With respect to the apparatus in the above embodiments, the specific manners for performing operations for individual modules therein have been described in detail in the embodiments regarding the related methods, and will not be elaborated herein.

An exemplary embodiment of this invention also provides an interface display apparatus that is capable of implementing the interface display method provided by this invention. The interface display apparatus includes a processor and a memory for storing instructions executable by the processor. The processor is configured to: transmit location information to a server; receive a dialect that the server returns, wherein the dialect corresponds to the location information that the server acquires; and display a user interface including a dialect operation item, where the dialect operation item is an operation item expressed using an expression in a dialect.

Optionally, the processor is configured to: acquire a dialect file corresponding to the dialect; for a default operation item in the user interface, find an expression in the dialect file which corresponds to the default operation item; and display the user interface including the operation item expressed using an the expression.

Optionally, the processor is configured to: detect whether a historically used dialect is included in at least two dialects; and if the historically used dialect is included in the at least two dialects, acquire a dialect file corresponding to the historically used dialect.

Optionally, the processor is configured to: transmit at least one of home location information on a terminal and geographical location information obtained by positioning to a server.

Optionally, the processor is configured to: transmit an IP address of the terminal to the server, wherein the IP address is used by the server to determine an area to which the terminal belongs and acquire and return a dialect corresponding to the area.

An exemplary embodiment of this invention also provides an interface display apparatus that is capable of implementing the interface display method provided by this invention. The interface display apparatus comprises: a processor and a memory for storing instructions executable by the processor. The processor is configured to: receive location information on a terminal that the terminal transmits; acquire a dialect corresponding to the location information; and return the dialect to the terminal, wherein the dialect is used by the terminal to display a user interface including a dialect operation item according to the dialect, and the dialect operation item is an operation item expressed using an expression in the dialect.

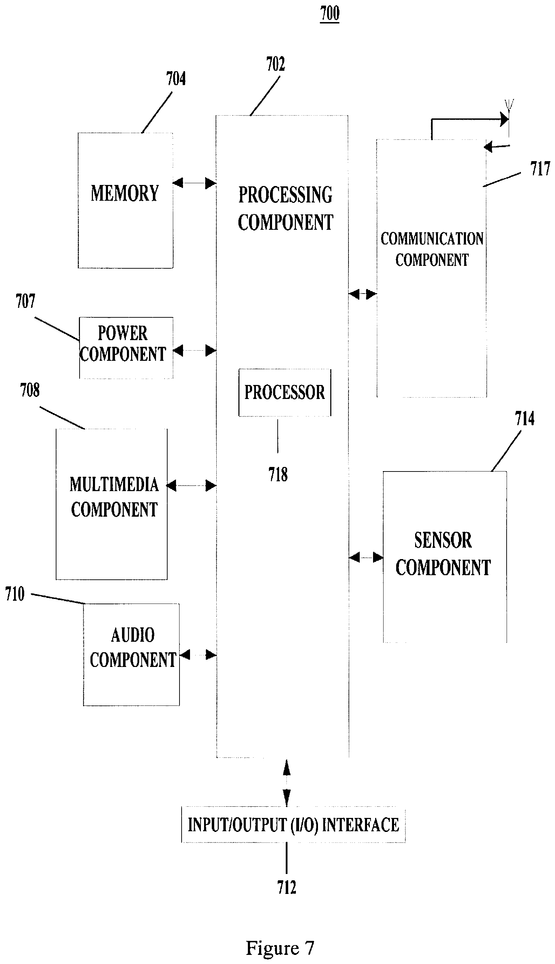

Fig. 7 is a block diagram showing an interface display apparatus according to an exemplary embodiment. For instance, an apparatus 700 can be a terminal like a mobile phone, an iPad, an electronic reader, a portable computer, a desktop computer and the like.

Referring to Fig. 7, the apparatus 700 may include one or more of the following components: a processing component 702, a memory 704, a power component 707, a multimedia component 708, an audio component 710, an input/output (I/O) interface 712, a sensor component 714, and a communication component 717.

The processing component 702 typically controls overall operations of the apparatus 700, such as the operations associated with display, telephone calls, data communications, camera operations, and recording operations. The processing component 702 may include one or more processors 718 to execute instructions to perform all or part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the apparatus 700. Examples of such data include instructions for any applications or methods operated on the apparatus 700, contact data, phonebook data, messages, pictures, video, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 707 provides power to various components of the apparatus 700. The power component 707 may include a power management system, one or more power sources, and any other components associated with the generation, management, and distribution of power in the apparatus 700.

The multimedia component 708 includes a screen providing an output interface between the apparatus 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. The front camera and the rear camera may receive an external multimedia datum while the apparatus 700 is in an operation mode, such as a photographing mode or a video mode. Each of the front camera and the rear camera may be a fixed optical lens system or have focus and optical zoom capability.

The audio component 710 is configured to output and/or input audio signals. For example, the audio component 710 includes a microphone ("MIC") configured to receive an external audio signal when the apparatus 700 is in an operation mode, such as a call mode, a recording mode, and a voice recognition mode. The received audio signal may be further stored in the memory 704 or transmitted via the communication component 717. In some embodiments, the audio component 710 further includes a speaker to output audio signals.

The I/O interface 712 provides an interface between the processing component 702 and peripheral interface modules, such as a keyboard, a click wheel, buttons, and the like. The buttons may include, but are not limited to, a home button, a volume button, a starting button, and a locking button.

The sensor component 714 includes one or more sensors to provide status assessments of various aspects of the apparatus 700. For instance, the sensor component 714 may detect an open/closed status of the apparatus 700, relative positioning of components, e.g., the display and the keypad, of the apparatus 700, the sensor component 714 may also detect a change in position of the apparatus 700 or a component of the apparatus 700, a presence or absence of user contact with the apparatus 700, an orientation or an acceleration/deceleration of the apparatus 700, and a change in temperature of the apparatus 700. The sensor component 714 may include a proximity sensor configured to detect the presence of nearby objects without any physical contact. The sensor component 714 may also include a light sensor, such as a CMOS or CCD image sensor, for use in imaging applications. In some embodiments, the sensor component 714 may also include an accelerometer sensor, a gyroscope sensor, a magnetic sensor, a pressure sensor, or a temperature sensor.

The communication component 717 is configured to facilitate communication, wired or wirelessly, between the apparatus 700 and other devices. The apparatus 700 can access a wireless network based on a communication standard, such as WiFi, 2G, or 3G, or a combination thereof. In one exemplary embodiment, the communication component 717 receives a broadcast signal or broadcast associated information from an external broadcast management system via a broadcast channel. In one exemplary embodiment, the communication component 717 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 704, executable by the processor 718 in the apparatus 700, for performing the above-described methods. For example, the non-transitory computer-readable storage medium may be a ROM, a RAM, a CD-ROM, a magnetic tape, a floppy disc, an optical data storage device, and the like.

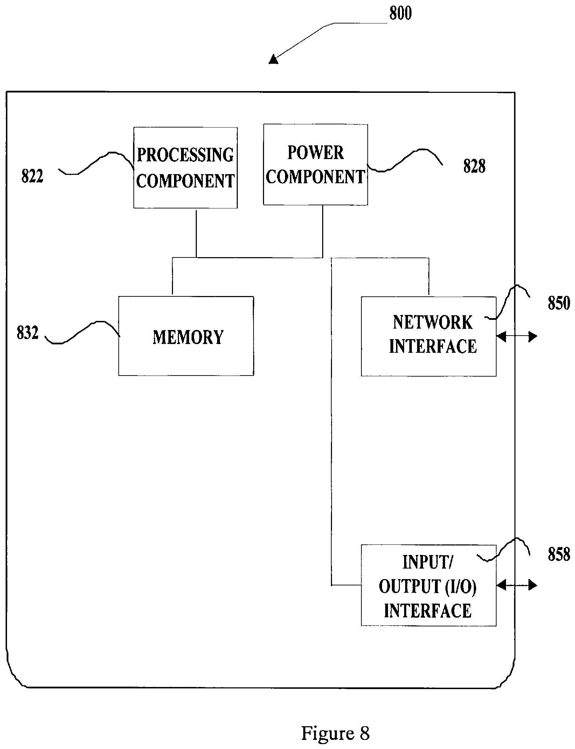

Fig. 8 is a block diagram showing an interface display apparatus according to another exemplary embodiment. Referring to Fig. 8, an apparatus 800 includes a processing component 822 which further includes one or more processors, and memory resources that a memory 832 represents for storing instructions executable by the processing component 822, e.g., applications. The application programs stored in the memory 832 may include one or more modules each corresponding to a set of instructions. In addition, the processing component 822 is configured to execute instructions, so as to implement some of the above interface display method executed by the server.

The apparatus 800 may further include a power component 828 configured to implement a power management of the apparatus 800, a wired or wireless network interface 850 configured to connect the apparatus 800 to a network, and an input/output (I/O) interface 858. The apparatus 800 can be operated based on an operating system stored in the memory 832, e.g., Windows ServerTM, Mac OS XTM, UnixTM, LinuxTM, FreeBSDTM or the like.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. An interface display method intended to be performed by a terminal, comprising:
transmitting (101) location information to a server;
receiving (105) a dialect that the server returns, wherein the dialect corresponds to the location information that the server acquires; and
displaying (106), according to the dialect, a user interface including a dialect operation item, wherein the dialect operation item is an operation item expressed using an expression in the dialect, wherein displaying according to the dialect the user interface including the dialect operation item comprises:
acquiring (206) a dialect file corresponding to the dialect;
for a default operation item in the user interface, finding (207) an expression in the dialect file which corresponds to the default operation item; and
displaying (208) the user interface including the default operation item expressed using the expression, and
wherein at least two dialects correspond to the location information, wherein acquiring the dialect file corresponding to the dialect comprises:
detecting whether a historically used dialect is included in the at least two dialects, the historically used dialect being a dialect that conforms to user's usage habits; and
if a historically used dialect is included in the at least two dialects, acquiring a dialect file corresponding to the historically used dialect.

2. The method according to claim 1, wherein transmitting the location information to the server comprises: transmitting (201) to the server at least one of a mobile phone number of the terminal and geographical location information obtained by positioning, and wherein :
the mobile phone number is used by the server to determine an area to which the terminal belongs according to home location information of the mobile phone number and return a dialect corresponding to the area, and
the geographical location information is used by the server to determine an area to which the terminal belongs according to the geographical location information and return a dialect corresponding to the area.

3. The method according to claim 1, wherein transmitting location information to the server comprises:
transmitting (301) an Internet Protocol (IP) address of the terminal to the server, wherein the IP address is used by the server to determine an area to which the terminal belongs according to the IP address and acquire and return the dialect corresponding to the area.

4. An interface display apparatus embedded in a terminal, comprising:
a transmitting module (410) configured to transmit location information to a server;
a receiving module (420) configured to receive a dialect that the server returns, wherein the dialect corresponds to the location information that the server acquires; and
a displaying module (430) configured to display a user interface including a dialect operation item according to the dialect, wherein the dialect operation item is an operation item expressed using an expression in the dialect, wherein the displaying module comprises:
an acquisition sub-module (531) configured to acquire a dialect file corresponding to the dialect;
a finding sub-module (532) configured to, for a default operation item in the user interface, find an expression in the dialect file which corresponds to the default operation item; and
a display sub-module (533) configured to display the user interface including the default operation item expressed using the expression, and
wherein at least two dialects correspond to the location information, the acquisition sub-module (531) further configured to:
detect whether a historically used dialect is included in the at least two dialects, the historically used dialect being a dialect that conforms to user's usage habits; and
if a historically used dialect is included in the at least two dialects, acquire a dialect file corresponding to the historically used dialect.

5. The apparatus according to claim 4, wherein the transmitting module (410) is configured to: transmit to the server at least one of a mobile phone number of the terminal and geographical location information obtained by positioning, and wherein :
the mobile phone number is used by the server to determine an area to which the terminal belongs according to home location information of the mobile phone number and return a dialect corresponding to the area, and
the geographical location information is used by the server to determine an area to which the terminal belongs according to the geographical location information and return a dialect corresponding to the area.

6. The apparatus according to claim 4, wherein the transmitting module (410) is configured to:
transmit an Internet Protocol (IP) address of the terminal to the server, wherein the IP address is used by the server to determine an area to which the terminal belongs according to the IP address and acquire and return the dialect corresponding to the area.

7. An interface display apparatus (700,800), comprising:
a processor (718,822); and
a memory (704,832) for storing instructions executable by the processor,
wherein the processor (718,822) is configured to perform an interface display method according to any of claims 1 to 3.

8. A computer program including instructions for executing the steps of an interface display method according to any one of claims 1 to 3, when said program is executed by a computer.

9. A recording medium readable by a computer and having recorded thereon a computer program including instructions for executing the steps of an interface display method according to any one of claims 1 to 3.

## Patentansprüche

1. Schnittstellenanzeigeverfahren, das dazu vorgesehen ist, von einem Endgerät durchgeführt zu werden, umfassend:
Übertragen (101) von Standortinformationen an einen Server,
Empfangen (105) eines Dialekts, den der Server zurücksendet, wobei der Dialekt den Standortinformationen entspricht, die der Server bezieht, und
Anzeigen (106) einer Benutzerschnittstelle, die ein Dialektoperationselement beinhaltet, gemäß dem Dialekt, wobei das Dialektoperationselement ein Operationselement ist, das unter Verwendung eines Ausdrucks in dem Dialekt ausgedrückt wird, wobei das Anzeigen der Benutzerschnittstelle, die das Dialektoperationselement beinhaltet, gemäß dem Dialekt umfasst:
Beziehen (206) einer Dialektdatei, die dem Dialekt entspricht,
für ein Standardoperationselement in der Benutzerschnittstelle Finden (207) eines Ausdrucks in der Dialektdatei, der dem Standardoperationselement entspricht, und
Anzeigen (208) der Benutzerschnittstelle, die das Standardoperationselement beinhaltet, das unter Verwendung des Ausdrucks ausgedrückt wird, und
wobei mindestens zwei Dialekte den Standortinformationen entsprechen, wobei das Beziehen der Dialektdatei, die dem Dialekt entspricht, umfasst:
Erfassen, ob ein historisch verwendeter Dialekt in den mindestens zwei Dialekten beinhaltet ist, wobei der historisch verwendete Dialekt ein Dialekt ist, der mit Gebrauchsgewohnheiten eines Benutzers übereinstimmt, und
wenn ein historisch verwendeter Dialekt in den mindestens zwei Dialekten beinhaltet ist, Beziehen einer Dialektdatei, die dem historisch verwendeten Dialekt entspricht.

2. Verfahren nach Anspruch 1, wobei das Übertragen der Standortinformationen an den Server umfasst: Übertragen (201) von mindestens einem von einer Mobiltelefonnummer des Endgeräts und geografischen Standortinformationen, die durch Positionierung erhalten werden, an den Server, und wobei:
die Mobiltelefonnummer von dem Server verwendet wird, um einen Bereich, zu dem das Endgerät gehört, gemäß Heimstandortinformationen der Mobiltelefonnummer zu bestimmen und einen Dialekt, der dem Bereich entspricht, zurückzusenden, und
die geografischen Standortinformationen von dem Server verwendet werden, um einen Bereich, zu dem das Endgerät gehört, gemäß den geografischen Standortinformationen zu bestimmen und einen Dialekt, der dem Bereich entspricht, zurückzusenden.

3. Verfahren nach Anspruch 1, wobei das Übertragen der Standortinformationen an den Server umfasst:
Übertragen (301) einer Internet-Protokoll(IP)-Adresse des Endgeräts an den Server, wobei die IP-Adresse von dem Server verwendet wird, um einen Bereich, zu dem das Endgerät gehört, gemäß der IP-Adresse zu bestimmen und den Dialekt, der dem Bereich entspricht, zu beziehen und zurückzusenden.

4. Schnittstellenanzeigevorrichtung, die in ein Endgerät eingebettet ist, umfassend:
ein Übertragungsmodul (410), das dazu ausgestaltet ist, Standortinformationen an einen Server zu übertragen,
ein Empfangsmodul (420), das dazu ausgestaltet ist, einen Dialekt, den der Server zurücksendet, zu empfangen, wobei der Dialekt den Standortinformationen entspricht, die der Server bezieht, und
ein Anzeigemodul (430), das dazu ausgestaltet ist, eine Benutzerschnittstelle, die ein Dialektoperationselement beinhaltet, gemäß dem Dialekt anzuzeigen, wobei das Dialektoperationselement ein Operationselement ist, das unter Verwendung eines Ausdrucks in dem Dialekt ausgedrückt wird, wobei das Anzeigemodul umfasst:
ein Bezugsteilmodul (531), das dazu ausgestaltet ist, eine Dialektdatei, die dem Dialekt entspricht, zu beziehen,
ein Findungsteilmodul (532), das dazu ausgestaltet ist, für ein Standardoperationselement in der Benutzerschnittstelle einen Ausdruck in der Dialektdatei zu finden, der dem Standardoperationselement entspricht, und
ein Anzeigeteilmodul (533), das dazu ausgestaltet ist, die Benutzerschnittstelle anzuzeigen, die das Standardoperationselement beinhaltet, das unter Verwendung des Ausdrucks ausgedrückt wird, und
wobei mindestens zwei Dialekte den Standortinformationen entsprechen, wobei das Bezugsteilmodul (531) ferner ausgestaltet ist zum:
Erfassen, ob ein historisch verwendeter Dialekt in den mindestens zwei Dialekten beinhaltet ist, wobei der historisch verwendete Dialekt ein Dialekt ist, der mit Gebrauchsgewohnheiten eines Benutzers übereinstimmt, und
wenn ein historisch verwendeter Dialekt in den mindestens zwei Dialekten beinhaltet ist, Beziehen einer Dialektdatei, die dem historisch verwendeten Dialekt entspricht.

5. Vorrichtung nach Anspruch 4, wobei das Übertragungsmodul (410) ausgestaltet ist zum Übertragen von mindestens einem von einer Mobiltelefonnummer des Endgeräts und geografischen Standortinformationen, die durch Positionierung erhalten werden, an den Server, und wobei:
die Mobiltelefonnummer von dem Server verwendet wird, um einen Bereich, zu dem das Endgerät gehört, gemäß Heimstandortinformationen der Mobiltelefonnummer zu bestimmen und einen Dialekt, der dem Bereich entspricht, zurückzusenden, und
die geografischen Standortinformationen von dem Server verwendet werden, um einen Bereich, zu dem das Endgerät gehört, gemäß den geografischen Standortinformationen zu bestimmen und einen Dialekt, der dem Bereich entspricht, zurückzusenden.

6. Vorrichtung nach Anspruch 4, wobei das Übertragungsmodul (410) ausgestaltet ist zum
Übertragen einer Internet-Protokoll(IP)-Adresse des Endgeräts an den Server, wobei die IP-Adresse von dem Server verwendet wird, um einen Bereich, zu dem das Endgerät gehört, gemäß der IP-Adresse zu bestimmen und den Dialekt, der dem Bereich entspricht, zu beziehen und zurückzusenden.

7. Schnittstellenanzeigevorrichtung (700, 800), umfassend:
einen Prozessor (718, 822) und
einen Speicher (704, 832) zum Speichern von Anweisungen, die durch den Prozessor ausführbar sind,
wobei der Prozessor (718, 822) dazu ausgestaltet ist, ein Schnittstellenanzeigeverfahren nach einem der Ansprüche 1 bis 3 durchzuführen.

8. Computerprogramm, das Anweisungen zum Ausführen der Schritte eines Schnittstellenanzeigeverfahrens nach einem der Ansprüche 1 bis 3 beinhaltet, wenn das Programm von einem Computer ausgeführt wird.

9. Aufzeichnungsmedium, das von einem Computer lesbar ist und ein darauf aufgezeichnetes Computerprogramm aufweist, das Anweisungen zum Ausführen der Schritte eines Schnittstellenanzeigeverfahrens nach einem der Ansprüche 1 bis 3 beinhaltet.

## Revendications

1. Procédé d'affichage d'interface destiné à être mis en œuvre par un terminal, comprenant les étapes ci-dessous consistant à :
transmettre (101) des informations de localisation à un serveur ;
recevoir (105) un dialecte que le serveur renvoie, dans lequel le dialecte correspond aux informations de localisation que le serveur acquiert ; et
afficher (106), selon le dialecte, une interface utilisateur incluant un élément d'exploitation de dialecte, dans lequel l'élément d'exploitation de dialecte est un élément d'exploitation exprimé en utilisant une expression dans le dialecte, dans lequel l'étape d'affichage, selon le dialecte, de l'interface utilisateur incluant l'élément d'exploitation de dialecte, comprend les étapes ci-dessous consistant à :
acquérir (206) un fichier de dialecte correspondant au dialecte ;
pour un élément d'exploitation par défaut dans l'interface utilisateur, rechercher (207) une expression dans le fichier de dialecte qui correspond à l'élément d'exploitation par défaut ; et
afficher (208) l'interface utilisateur incluant l'élément d'exploitation par défaut exprimé en utilisant l'expression ; et
dans lequel au moins deux dialectes correspondent aux informations de localisation, dans lequel l'étape d'acquisition du fichier de dialecte correspondant au dialecte comprend les étapes ci-dessous consistant à :
détecter si un dialecte utilisé historiquement est inclus dans lesdits au moins deux dialectes, le dialecte utilisé historiquement étant un dialecte qui est en conformité avec les habitudes d'utilisation de l'utilisateur ; et
si un dialecte utilisé historiquement est inclus dans lesdits au moins deux dialectes, acquérir un fichier de dialecte correspondant au dialecte utilisé historiquement.

2. Procédé selon la revendication 1, dans lequel l'étape de transmission des informations de localisation au serveur consiste à : transmettre (201), au serveur, au moins un élément parmi un numéro de téléphone mobile du terminal et des informations de localisation géographique obtenues par positionnement, et dans lequel :
le numéro de téléphone mobile est utilisé par le serveur en vue de déterminer une zone à laquelle le terminal appartient selon des informations de localisation nominale du numéro de téléphone mobile, et de renvoyer un dialecte correspondant à la zone ; et
les informations de localisation géographique sont utilisées par le serveur en vue de déterminer une zone à laquelle le terminal appartient selon les informations de localisation géographique, et de renvoyer un dialecte correspondant à cette zone.

3. Procédé selon la revendication 1, dans lequel l'étape de transmission des informations de localisation au serveur consiste à :
transmettre (301) une adresse de protocole Internet (IP) du terminal, au serveur, dans laquelle l'adresse IP est utilisée par le serveur en vue de déterminer une zone à laquelle le terminal appartient selon l'adresse IP, et d'acquérir et de renvoyer le dialecte correspondant à la zone.

4. Appareil d'affichage d'interface intégré dans un terminal, comprenant :
un module de transmission (410) configuré de manière à transmettre des informations de localisation à un serveur ;
un module de réception (420) configuré de manière à recevoir un dialecte que le serveur renvoie, dans lequel le dialecte correspond aux informations de localisation que le serveur acquiert ; et
un module d'affichage (430) configuré de manière à afficher une interface utilisateur incluant un élément d'exploitation de dialecte selon le dialecte, dans lequel l'élément d'exploitation de dialecte est un élément d'exploitation exprimé en utilisant une expression dans le dialecte, dans lequel le module d'affichage comprend :
un sous-module d'acquisition (531) configuré de manière à acquérir un fichier de dialecte correspondant au dialecte ;
un sous-module de recherche (532) configuré de manière à, pour un élément d'exploitation par défaut dans l'interface utilisateur, rechercher une expression dans le fichier de dialecte qui correspond à l'élément d'exploitation par défaut ; et
un sous-module d'affichage (533) configuré de manière à afficher l'interface utilisateur incluant l'élément d'exploitation par défaut exprimé en utilisant l'expression ; et
dans lequel au moins deux dialectes correspondent aux informations de localisation, le sous-module d'acquisition (531) étant en outre configuré de manière à :
détecter si un dialecte utilisé historiquement est inclus dans lesdits au moins deux dialectes, le dialecte utilisé historiquement étant un dialecte qui est en conformité avec les habitudes d'utilisation de l'utilisateur ; et
si un dialecte utilisé historiquement est inclus dans lesdits au moins deux dialectes, acquérir un fichier de dialecte correspondant au dialecte utilisé historiquement.

5. Appareil selon la revendication 4, dans lequel le module de transmission (410) est configuré de manière à : transmettre, au serveur, au moins un élément parmi un numéro de téléphone mobile du terminal et des informations de localisation géographique obtenues par positionnement, et dans lequel :
le numéro de téléphone mobile est utilisé par le serveur en vue de déterminer une zone à laquelle le terminal appartient selon des informations de localisation nominale du numéro de téléphone mobile, et de renvoyer un dialecte correspondant à la zone ; et
les informations de localisation géographique sont utilisées par le serveur en vue de déterminer une zone à laquelle le terminal appartient selon les informations de localisation géographique, et de renvoyer un dialecte correspondant à cette zone.

6. Appareil selon la revendication 4, dans lequel le module de transmission (410) est configuré de manière à :
transmettre une adresse de protocole Internet (IP) du terminal, au serveur, dans lequel l'adresse IP est utilisée par le serveur en vue de déterminer une zone à laquelle le terminal appartient selon l'adresse IP, et d'acquérir et de renvoyer le dialecte correspondant à la zone.

7. Appareil d'affichage d'interface (700, 800), comprenant :
un processeur (718, 822) ; et
une mémoire (704, 832) destinée à stocker des instructions exécutables par le processeur ;
dans lequel le processeur (718, 822) est configuré de manière à mettre en œuvre un procédé d'affichage d'interface selon l'une quelconque des revendications 1 à 3.

8. Programme informatique incluant des instructions pour exécuter les étapes d'un procédé d'affichage d'interface selon l'une quelconque des revendications 1 à 3, lorsque ledit programme est exécuté par un ordinateur.

9. Support d'enregistrement lisible par un ordinateur, et sur lequel est enregistré un programme informatique incluant des instructions pour exécuter les étapes d'un procédé d'affichage d'interface selon l'une quelconque des revendications 1 à 3.
